# EUROPÄISCHE PATENTSCHRIFT

(11) **EP 0 523 404 B1**
(45) Veröffentlichungstag und Bekanntmachung des Hinweises auf die Patenterteilung: **20.09.1995**
(21) Anmeldenummer: 92110491.5
(22) Anmeldetag: 22.06.1992
(51) Int. Cl.: B23C 5/10, B23C 5/22

(54) **Zweischneidiges Gesenkwerkzeug zum Fräsen und Bohren**
Tool for milling and drilling with two cutting edges
Outil à deux arêtes de coupe pour fraiser et alaiser

(30) Priorität: 20.06.1991 DE 9107615 U
(43) Veröffentlichungstag der Anmeldung: 20.01.1993
(73) Patentinhaber: Walter Kieninger GmbH Hartmetall- und Diamantwerkzeugfabrik, D-77933 Lahr (DE)
(72) Erfinder: Kieninger, Walter, W-7630 Lahr 17 (DE); Füner, Ernst, W-7632 Friesenheim (DE)
(74) Vertreter: Grünecker, Kinkeldey, Stockmair & Schwanhäusser Anwaltssozietät

(56) Entgegenhaltungen:
- EP-A- 0 027 174
- EP-A- 0 096 147
- GB-A- 2 082 102
- US-A- 4 047 826
- US-A- 5 064 316

## Beschreibung

Die vorliegende Erfindung betrifft ein zweischneidiges Gesenkwerkzeug zum Fräsen und Bohren nach dem Oberbegriff des Anspruchs 1; siehe EP-A 0 096 147.

Aus der AT-PS 387 926 ist ein zweischneidiges Gesenkwerkzeug zum Fräsen und Bohren bekannt, das einen im wesentlichen zylindrischen Aufnahmeschaft, der in seinem vorderen Bereich eine nach vorne offene parallele Innenseitenwände aufweisende Nut zur Aufnahme einer Schneidplatte aufweist und eine Befestigungsschraube vorgesehen ist, die in einer senkrecht zur Achse des Aufnahmeschafts und den parallelen Innsenseitenwänden der Nut verlaufenden Bohrung zur Lagesicherung der Schneidplatte einschraubbar ist, wobei die Befestigungsschraube sich im eingeschraubten Zustand durch eine Durchgangsöffnung in der Schneidplatte erstreckt.

Gemäß AT-PS 387 926 kann die stumpf oder schadhaft gewordene Schneidplatte ausgetauscht werden oder im Aufnahmeschaft nach Lösen ihrer Klemmung verdreht werden, um einen weiteren Teil der an dieser angeschraubten Schneidkanten zum Ansatz bringen zu können. Dabei ist es möglich, die Schneidplatte aus dem Aufnahmeschaft herauszunehmen und um 180° zu wenden oder in diesem zu belassen und in solchem Maße zu verdrehen, daß sich ein noch scharfer Schneidkantenteil an der Stelle des abgenutzten Schneidkantenteils befindet.

Soll dabei die Schneidplatte gedreht werden, was nur möglich ist, wenn die Schneidplatte entsprechend punktsymmetrisch aufgebaut ist, im Gegensatz zur achssymmetrischen Ausgestaltung beim Wenden um 180°, so zeigt die vorgenannte Druckschrift kreisrunde Schneidplatten, bei denen eine entsprechende Einjustierung sich äußerst kompliziert darstellt.

Aus der DE-OS 26 53 302 ist ein Kugelbahn- oder Fingerfräser bekannt, bei dem die Aufgabe gelöst werden soll, Hartmetallplatten auch an Kugel- bzw. Fingerfräsern zu verwenden. Der Aufbau sowohl des Werkzeughalters als auch der Schneidplatte ist jedoch äußerst kompliziert und die Einstellung der Schneidplatte im Werkzeughalter erfolgt auf aufwendige Weise. Insbesondere wird eine Reihe von Zusatzbohrungen und entfernbaren Klemmteilen benötigt, die wiederum zur exakten Festlegung eine hohe Fertigungsgenauigkeit erfordern.

Der vorliegenden Erfindung liegt deshalb die Aufgabe zugrunde, ein zweischneidiges Gesenkwerkzeug zum Fräsen und Bohren der eingangs genannten Art zu schaffen, das einen äußerst einfachen und schnell einstellbaren Aufbau aufweist.

Erfindungsgemäß wird die Aufgabe durch ein Gesenkwerkzeug mit den Merkmalen gemäß Patentanspruch 1 gelöst.

Aufgrund dieser Ausgestaltung wird eine einfache und schnelle Lagesicherung der Schneidplatte im Werkzeughalter bzw. im Aufnahmeschaft erreicht, wobei insbesondere ermöglicht wird, die Schneidplatte in einer Vielzahl von Positionen aufzunehmen.

Durch die Anordnung eines Fixierprismas wird insbesondere eine Selbstzentrierung der Schneidplatte ermöglicht, was eine besonders leichte und schnelle Aufnahme der Schneidplatte ermöglicht.

Dies ermöglicht wiederum, daß die Schneidplatte aus einem speziellen hochwertigen Werkstoff ausgebildet ist, was zu längerer Standzeit des Werkzeugs führt.

Eine besonders einfache feste Lagesicherung der Schneidplatte in dem Aufnahmeschaft wird dadurch erreicht, daß im eingesetzten Zustand die Schneidplatte gegen das Fixierprisma gedrückt wird.

Dies erfolgt vorteilhafterweise dadurch, daß die Bohrung des Aufnahmeschafts größer ist als die Durchgangsöffnung der Schneidplatte, und daß die Achse der trichterförmigen Senkung bezüglich der Achse der Durchgangsöffnung der Schneidplatte in Richtung des Bodens der Nut entlang der Achse des Aufnahmeschafts versetzt ist. Dies geschieht vorteilhafterweise in einem besonders engen Toleranzbereich, so daß eine plastische Verformung der Befestigungsschraube im wesentlichen vermieden wird.

Besonders vorteilhaft wird eine Justierung der Schneidplatte dadurch erreicht, das die im Fixierprisma ausgebildeten Anlageflächen gegensinnig geneigt sind.

Die Neigung kann vorteilhafterweise so vorgenommen werden, daß die entlang der Anlageflächen verlaufenden Ebenen die parallelen Innenseitenwände unter einem Winkel von ungleich 90° schneiden.

Dabei sind die Anlageflächen derart angeordnet, daß alle zu den Innenseitenwänden der Nut entlang der Anlageflächen des Fixierprismas verlaufende Gerade sich unter einem Winkel von im wesentlichen 90° schneiden.

Eine besonders vielseitige Anwendung ergibt sich, wenn die Schneidplatte im wesentlichen als kreisförmige Platte ausgebildet ist und vier jeweils um 90° versetzt zu den Anlageflächen des Fixierprismas komplementäre Fasenflächen aufweist. Hierbei kann die Schneidplatte weiterhin vier Schneidkanten aufweisen.

Die Schneidplatte des erfindungsgemäßen Gesenkwerkzeugs kann vorteilhafterweise so ausgebildet sein, daß jede der Schneidkanten sich im wesentlichen entlang eines Viertelkreises erstreckt. Dadurch wird erreicht, daß eine hohe Ausnutzung des Gesenkwerkzeugs erzielt wird, da eine entsprechend lange Schneidkante vorgesehen ist.

Hierzu trägt vorteilhafterweise auch bei, daß jeweils zwei Schneidkanten um 180° zueinander versetzt und an einer Seite der Schneidplatte (5) angeordnet sind.

Insbesondere sorgt die Auspitzung, die am Ende einer jeden viertelkreisförmigen Schneidkante ausgebildet ist, für einen sauberen Schnitt.

Die vorgenannten Ausführungen der Erfindung führen zu folgenden besonderen Vorteilen. Das Drehen bzw. Wenden der Schneidplatte um 180° um die Mittelpunktachse ihrer Durchgangsöffnung bewirkt den Einsatz zweier neuer Schneiden z.B. für ein rechtsschneidendes Werkzeug mit entsprechendem rechten Halter. Das Drehen bzw. Wenden der Schneidplatte um 90° um die Mittelpunktachse der Durchgangsöffnung bewirkt den Einsatz des Werkzeugs als linksschneidendes Werkzeug, wobei es eines neuen Werkzeughalters als entsprechenden linken Halter bedarf. Demzufolge kann für beide Bearbeitungsarten sowohl als rechtsschneidendes als auch als linksschneidendes Werkzeug die Ausbildung der Schneidplatte auf einen Plattent begrenzt werden, was zu einer besonders universellen Einsatzmöglichkeit der Schneid- oder Wechselplatte führt, wobei sowohl eine rationellere Lagerhaltung einerseits als auch die Vermeidung unterschiedlicher Typen und entsprechende Kosteneinsparungen andererseits möglich werden.

Weitere Einzelheiten, Merkmale und Vorteile der vorliegenden Erfindung ergeben sich aus der nachfolgenden Beschreibung unter Bezugnahme auf die Zeichnung. Darin zeigt:
- Fig. 1: eine perspektivische Explosionsdarstellung des nur aus vier Teilen bestehenden erfindungsgemäßen zweischneidigen Gesenkwerkzeugs;
- Fig. 2: eine Seitenansicht mit teilweiser Schnittansicht des Aufnahmeschafts allein;
- Fig. 3: eine Ansicht von oben in Bezug auf die Ansicht von Fig. 2 auf den vorderen Teil des Aufnahmeschaftes;
- Fig. 4: eine Ansicht von oben auf das erfindungsgemäße Fixierprisma;
- Fig. 5: eine Schnittansicht des Fixierprismas gemäß der Schnittlinie V-V von Fig. 4;
- Fig. 6: eine Draufsicht auf die Schneidplatte zur Verwendung im erfindungsgemäßen Gesenkwerkzeug;
- Fig. 7: eine Schnittansicht der Schneidplatte gemäß der Schnittlinie VII-VII von Fig. 6;
- Fig. 8: eine Schnittansicht der Schneidplatte gemäß der Linie VIII-VIII von Fig. 6;
- Fig. 9: eine Seitenansicht der Schneidplatte des erfindungsgemäßen Gesenkwerkzeugs; und
Gemäß Fig. 1 ist ein zweischneidiges Gesenkwerkzeug 1 gemäß der vorliegenden Erfindung in perspektivischer Ansicht dargestellt. Das Gesenkwerkzeug 1 weist einen Aufnahmeschaft 3 auf, der zum Einsatz in eine entsprechende Werkzeugmaschine ausgebildet ist.

Der vordere Bereich des Aufnahmeschafts 3 weist einen geringeren Durchmesser auf und dient zur Aufnahme des Werkzeugs, insbesondere der Schneidplatte 5.

Hierzu weist der im wesentlichen zylindrische Aufnahmeschaft 3 in seinem vorderen Bereich 7 eine Nut 9 auf, die nach vorne offen ist und parallele Innenseitenwände 11 und 13 aufweist. Im Kopfbereich des Aufnahmeschafts 3 ist eine Bohrung 15 vorgesehen, die sich senkrecht sowohl zur Drehachse 17 des Aufnahmeschafts 3 als auch senkrecht zu den parallelen Innenseitenwänden 11 und 13 mit ihrer Achse 19 erstreckt.

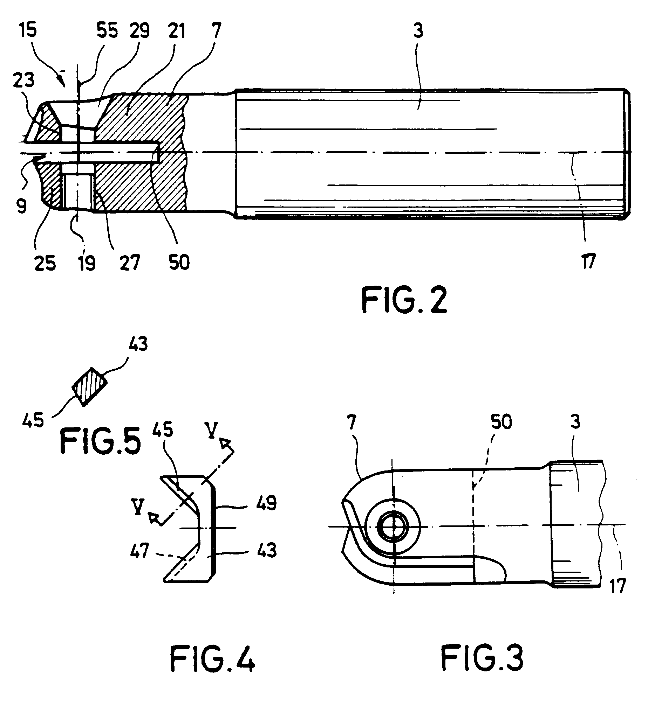

Wie aus Fig. 2 ersichtlich, weist die Bohrung 15 in einem Schenkel 21 des vorderen Bereichs 7 des Aufnahmeschafts 3 eine Durchgangsbohrung 23 auf und weist im anderen Schenkel 25 des vorderen Bereichs 7 des Aufnahmeschafts 3 ein Innengewinde 27 auf.

Vom äußeren Umfangsbereich des oberen Schenkels 21 weist die Bohrung 15 eine trichterförmige Senkung 29 auf zum Führen und Lagesichern eines entsprechend ausgebildeten Kopfes 33 einer Befestigungsschraube 31. Die Befestigungsschraube 31 weist einen glatten Schaftbereich 35 und einen Gewindebereich 37 auf, zu dessen Eingriff in das Innengewinde 27.

Um die Schneidplatte 5 in ihrer Lage im Aufnahmeschaft 3 entsprechend festzulegen, wird eine Dreipunktauflage vorgesehen, die gebildet wird aus Anlage der Innenfläche 41 einer Durchgangsöffnung 39 der Schneidplatte 5, und zweier Anlageflächen 45 und 47 eines Fixierprismas 43.

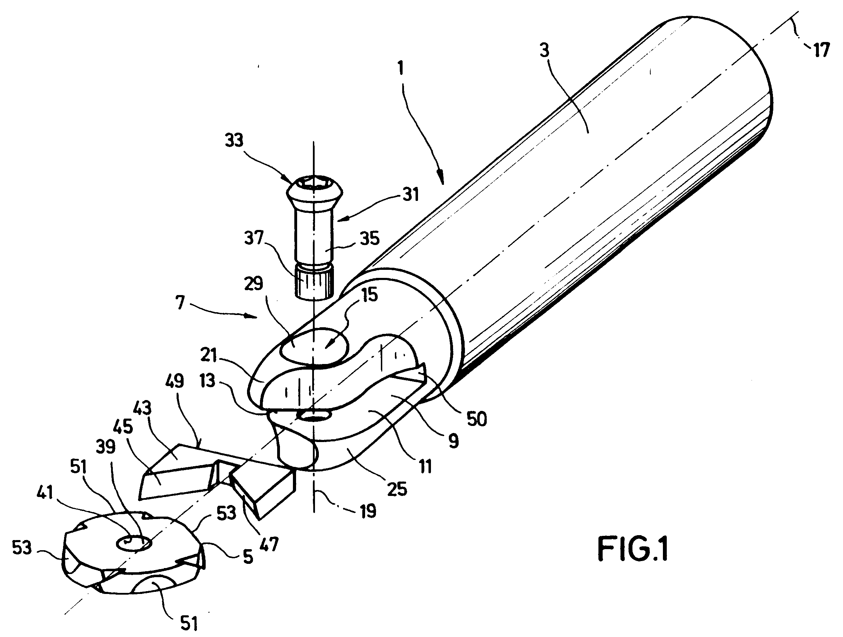

Das Fixierprisma hat im Beispielsfalle gemäß Fig. 1 folgende Ausgestaltung. Eine Bodenfläche 49, die zur Anlage an den Boden 50 der Nut 9 ausgebildet ist. Die Anlageflächen 45 und 47 sind unterschiedlich geneigt ausgebildet, wobei deren verlängerte Ebenen die parallelen Innenseitenwände 11 und 13 unter einem Winkel ungleich 90° schneiden.

Zur Ausbildung einer entsprechenden Symmetrie sind jedoch die Schnittwinkel entsprechend gleich ausgebildet.

Die Schneidplatte 5 weist zu den Anlageflächen 45 und 47 komplementäre Fasenflächen 51 und 53 auf.

Vorteilhafterweise wird das Fixierprisma 43 fest in der Nut 9 montiert, so daß sich ein vordefinierter Abstand zwischen den Anlageflächen 45 und 47 und der Achse der Schraube 31 bzw. der Achse der Bohrung 15 ergibt. Hierzu kann das Fixierprisma 43 in die Nut eingepaßt sein, so daß es unter Klemmsitz lagegesichert ist. Vorzugsweise kann, um einen noch sichereren Halt des Fixierprismas 43 zu erreichen, dieses in die Nut 9 eingeklebt und vorzugsweise eingeschweißt sein.

Alternativ hierzu kann das Fixierprisma 43 direkt mittels Erodierverfahren erzeugt sein, so daß es einstückig mit dem Aufnahmeschaft 3 ausgebildet ist.

Zur Festlegung der Schneidplatte 5 im Aufnahmeschaft 3 wird die Schneidplatte 5 in die Nut 9 eingebracht und die Schraube 31 durch die Bohrung 15, die Durchgangsöffnung 39 der Schneidplatte 5 gesteckt und in das Innengewinde 27 eingeschraubt.

um eine Vorspannung zu erzeugen, die die Schneidplatte gegen das Prisma drückt, ist die Achse 55 der trichterförmigen Senkung 29 leicht bezüglich der Achse 19 der Bohrung 15 in Richtung auf den Boden 50 der Nut 9 versetzt entlang der Achse 17 ausgebildet. Durch Einschrauben der Befestigungsschraube 31 wird dann bei Anlage des Kopfes 33 an die trichterförmige Senkung 29 eine entsprechende Spannung erzeugt, die die Schneidplatte in Richtung auf den Boden 50 der Nut 9 drückt.

In Fig. 3 ist eine Draufsicht auf den Aufnahmeschaft gemäß Fig. 2 dargestellt, die insbesondere die Ausgestaltung des vorderen Bereichs 7 des Aufnahmeschafts 3 zeigt.

Fig. 4 zeigt die Draufsicht auf das Fixierprisma 43, wie es in Fig. 1 dargestellt ist. Es wird deutlich, daß die Achse 17 gemäß Fig. 3 auch entsprechend in Fig. 4 gemäß der Darstellung in Fig. 1 verläuft, so daß auch aus diesen Ansichten das leichte Einsetzen des Fixierprismas 43 in die Nut 9 des Aufnahmeschafts deutlich wird.

Fig. 5 zeigt eine Schnittansicht durch das Fixierprisma gemäß der Linie V-V von Fig. 4, wodurch die Neigung der Anlagefläche 45 deutlich wird.

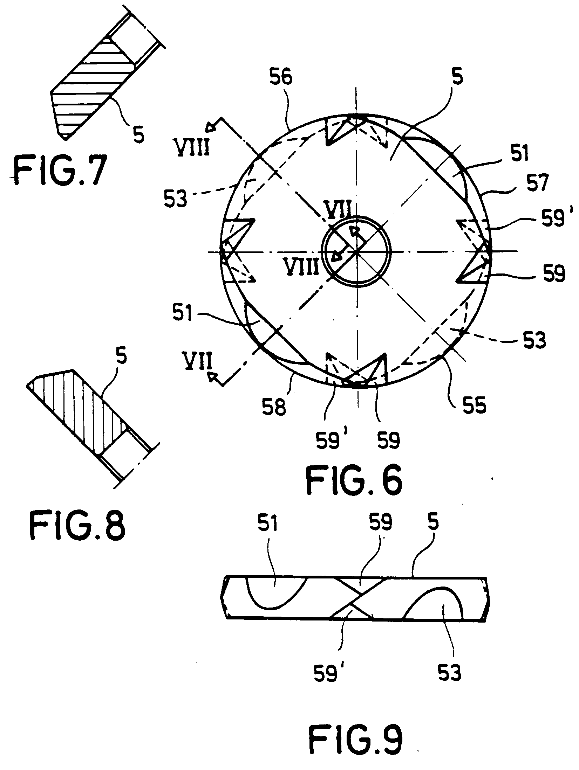

Fig. 6 zeigt eine Draufsicht auf die erfindungsgemäße und besonderes ausgebildete Schneidplatte 5. Hierbei sind deutlich die komplementären Fasenflächen 51 und 53 zu erkennen und ergeben sich hier Schneiden 55, 56, 57, 58. Dabei sind jeweils zwei Schneiden 55 und 56 bzw. 57 und 58 auf einer Seite der Schneidplatte 5 angeordnet und um 180^{o} dabei zueinander versetzt.

An den beiden Enden einer jeden Schneidkante 55, 56, 57 oder 58 ist jeweils eine Ausspitzung 59 bzw. 59' vorgesehen, wie dies auch insbesondere aus der eine Seitenansicht der Schneidplatte 5 zeigende Fig. 9 ersichtlich ist. Die der Unterseite zugeordneten Ausspitzungen sind in den Fig. 6 und 9 mit 59' bezeichnet.

Die Fig. 7 und 8 zeigen Schnittansichten der Schneidplatte 5 gemäß den Linien VII-VII bzw. VIII-VIII von Fig. 6. Dabei wird insbesondere die Außenprofilierung der Schneidplatte 5 in der entsprechenden Schnittebene sichtbar.

Fig. 9 zeigt eine Seitenansicht der Schneidplatte 5, wie oben bereits erwähnt, wobei insbesondere die gesamte Außenkontur der Schneidplatte 5 deutlich wird.

Insgesamt wird mit dem vorliegenden erfindungsgemäßen Gesenkwerkzeug und der hierfür besonders ausgebildeten Schneidplatte 5 ein Werkzeug geschaffen, das aufgrund seiner Anpassungsfähigkeit an die verschiedenen Bearbeitungsanforderungen eine erheblich längere Standzeit und eine schnelle Anpassung an den jeweiligen Arbeitsgang ermöglicht, insbesondere dadurch, daß durch sehr flexibles Wechseln der Schneidplatte eine große Anzahl von Arbeiten mit ein und derselben Schneidplatte ausgeführt werden kann, ohne daß dabei das gesamte Werkzeug geändert bzw. ausgetauscht werden muß. Wie aus den Fig. 6 bis 9 insbesondere ersichtlich, ergibt sich der Vorteil, daß aufgrund der Freiflächen und Einkerbungen an der Spanfläche das Fräsen eines genauen Radius in axialer sowie in radialer Richtung - voller Halbkreisbogen - ermöglicht wird.

Das Gesenkwerkzeug kann aufgrund der speziellen Ausprägung der Einkerbungen zur Zerspanung ins volle Material axial eintauchen.

Darüber hinaus ermöglicht der spezielle Anschliff das Bohren in axialer Werkzeugrichtung über den Plattenradius hinaus, ohne daß es zur Zerstörung bzw. zum Ausbrechen der Wechselplatte am größtmöglichen Umfang in radialer Richtung der in Drehrichtung hinten liegenden Plattenkante kommt.

## Patentansprüche

1. Zweischneidiges Gesenkwerkzeug (1) zum Fräsen und Bohren, mit einem im wesentlichen zylindrischen Aufnahmeschaft (3), der in seinem vorderen Bereich (7) eine nach vorne offene, parallele Innenseitenwände (11,13) aufweisende Nut (9) zur Aufnahme einer Schneidplatte (5) aufweist, und mit einer Befestigungsschraube (31), die in einer senkrecht zur Achse (17) des Aufnahmeschafts (3) und den parallelen Innenseitenwänden (11,13) der Nut (9) verlaufende Bohrung (15) zur Lagesicherung der Schneidplatte (5) einschraubbar ist, wobei die Befestigungsschraube (31) sich im eingeschraubten Zustand durch eine Durchgangsöffnung (39) in der Schneidplatte erstreckt,
wobei zwischen dem Boden (50) der Nut (9) und der Schneidplatte (5) ein Fixierprisma (43) vorgesehen ist, das eine für eine Dreipunktauflage der Schneidplatte (5) 90°-prismatische Zentrierung (Anlageflächen 45,47) aufweist, und die Schneidplatte hierzu komplementäre Fasenflächen (51,53) aufweist, und
wobei die Schneidplatte (5) im wesentlichen als kreisförmige Platte ausgebildet ist und vier um jeweils 90° versetzt zu den Anlageflächen (45,47) des Fixierprismas (43) komplementäre Fasenflächen (51,53) aufweist,
**dadurch gekennzeichnet**,
daß die am Außenumfang der kreisförmigen Schneidplatte (5) vorgesehenen Fasenflächen (51,53) durch den Kopf der Befestigungsschraube und eine trichterförmige Senkung (29) am vorderen Bereich des Aufnahmeschaftes mit den Anlageflächen (45,47) in Eingriff bringbar ist.

2. Gesenkwerkzeug nach Anspruch 1, **dadurch gekennzeichnet**, daß die Schneidplatte (5) im eingesetzten Zustand unter Vorspannung gegen das Fixierprisma (43) gedrückt wird.

3. Gesenkwerkzeug nach Anspruch 2, **dadurch gekennzeichnet**, daß zur Erzeugung der Vorspannung die Bohrung (15) des Aufnahmeschafts (3) größer ist als die Durchgangsöffnung (39) der Schneidplatte (5), und daß die Achse (55) der trichterförmigen Senkung (29) bezüglich der Achse (19) der Durchgangsöffnung (39) der Schneidplatte in Richtung des Bodens (50) der Nut (9) entlang der Achse (17) des Aufnahmeschafts (3) versetzt ist.

4. Gesenkwerkzeug nach einem der Ansprüche 1 bis 3, **dadurch gekennzeichnet**, daß das Fixierprisma (43) zwei gegensinnig geneigte Anlageflächen (45,47) ausfweist.

5. Gesenkwerkzeug nach Anspruch 4, **dadurch gekennzeichnet**, daß die entlang der Anlageflächen (45,47) verlaufenden Ebenen die parallelen Innenseitenwände (11,13) unter einem Winkel ungleich 90° schneiden.

6. Gesenkwerkzeug nach Anspruch 5, **dadurch gekennzeichnet**, daß parallel zu den Innenseitenwänden (11,13) entlang der Anlageflächen (45,47) des Fixierprismas (43) verlaufende Geraden sich unter einem Winkel von im wesentlichen 90° schneiden.

7. Gesenkwerkzeug nach Anspruch 5 oder 6, **dadurch gekennzeichnet**, daß die Neigungswinkel der Anlageflächen (45,47) symmetrisch ausgebildet sind.

8. Gesenkwerkzeug nach einem der Ansprüche 1 bis 7, **dadurch gekennzeichnet**, daß die Schneidplatte vier Schneidkanten (55,56,57,58) aufweist.

9. Gesenkwerkzeug nach Anspruch 8, **dadurch gekennzeichnet**, daß jede der Schneidkanten (55,56,57,58) sich im wesentlichen entlang eines Viertelkreises erstreckt.

10. Gesenkwerkzeug nach Anspruch 8 oder 9, **dadurch gekennzeichnet** daß jeweils zwei Schneidkanten (55,56;57,58) um 180° zueinander versetzt und an einer Seite der Schneidplatte (5) angeordnet sind.

11. Gesenkwerkzeug nach Anspruch 10, **dadurch gekennzeichnet**, daß die beiden Schneidkanten einer Seite der Schneidplatte (5) um jeweils 90° bezüglich der Schneidkanten auf der anderen Seite der Schneidplatte (5) angeordnet sind.

12. Gesenkwerkzeug nach einem der Ansprüche 8 bis 11, **dadurch gekennzeichnet**, daß am Ende einer jeden im wesentlichen viertelkreiförmigen Schneidkante (55,56,57,58) eine Ausspitzung (59,59') ausgebildet ist.

## Claims

1. Tool (1) for milling and drilling with two cutting edges, comprising a substantially cylindrical receiving shank (3) provided in its front region (7) with a groove (9) open towards the front and having parallel inside walls (11, 13) for receiving a cutting insert (5), and a fixing screw (31) which can be screwed into a bore (15) extending perpendicularly to the axis (17) of the receiving shank (3) and the parallel inside walls (11, 13) of the groove (9) to fix the cutting insert (5) in position, the fixing screw (31) extending through a through opening (39) in the cutting insert when it is screwed in, a locating prism (43) provided with 90°-prismatic centring (bearing surfaces 45, 47) for three-point support of the cutting insert (5) being provided between the bottom (50) of the groove (9) and the cutting insert (5), and the cutting insert having chamfered surfaces (51, 53) complementary thereto, and the cutting insert (5) being substantially in the form of a circular insert and having four complementary chamfered surfaces (51, 53) each offset by 90° relative to the bearing surfaces (45, 47) of the locating prism (43), characterised in that the chamfered surfaces (51, 53) provided on the external circumference of the circular cutting insert (5) can be brought into engagement with the bearing surfaces (45, 47) by the head of the fixing screw and a funnel-shaped countersunk hole (29) in the front region of the receiving shank.

2. Tool according to claim 1, characterised in that the cutting insert (5) is pressed against the locating prism (43) with preliminary clamping when it is inserted.

3. Tool according to claim 2, characterised in that, in order to produce the preliminary clamping, the bore (15) in the receiving shank (3) is larger than the through opening (39) in the cutting insert (5) and that the axis (55) of the funnel-shaped countersunk hole (29) is offset relative to the axis (19) of the through opening (39) in the cutting insert in the direction of the bottom (50) of the groove (9) along the axis (17) of the receiving shank (3).

4. Tool according to one of claims 1 to 3, characterised in that the locating prism (43) has two bearing surfaces (45, 47) inclined in opposite directions.

5. Tool according to claim 4, characterised in that the planes extending along the bearing surfaces (45, 47) intersect the parallel inside walls (11, 13) at an angle not equal to 90°.

6. Tool according to claim 5, characterised in that straight lines extending along the bearing surfaces (45, 47) of the locating prism (43) parallel to the inside walls (11, 13) intersect at an angle of substantially 90°.

7. Tool according to claim 5 or claim 6, characterised in that the angles of inclination of the bearing surfaces (45, 47) are symmetrical.

8. Tool according to one of claims 1 to 7, characterised in that the cutting insert has four cutting edges (55, 56, 57, 58).

9. Tool according to claim 8, characterised in that each of the cutting edges (55, 56, 57, 58) extends substantially through a quadrant.

10. Tool according to claim 8 or claim 9, characterised in that two respective cutting edges (55, 56; 57, 58) are offset by 180° relative to one another and are arranged on one side of the cutting insert (5).

11. Tool according to claim 10, characterised in that the two cutting edges on one side of the cutting insert (5) are arranged offset by 90° relative to the cutting edges on the other side of the cutting insert (5).

12. Tool according to one of claims 8 to 11, characterised in that a point (59, 59') is formed at the end of each substantially quadrantal cutting edge (55, 56, 57, 58).

## Revendications

1. Outil (1) à deux tranchants pour fraiser et forer, comprenant une tige porte-outil (3) sensiblement cylindrique qui comporte dans sa partie avant (7), pour la réception d'une plaque de découpage (5), une encoche (9) ouverte vers l'avant pourvue de parois latérales intérieures (11, 13) parallèles, et comprenant une vis de fixation (31) qui, pour bloquer la plaque de découpage (5), peut être vissée dans un perçage (15) s'étendant perpendiculairement à l'axe (17) de la tige porte-outil (3) et aux parois latérales intérieures (11, 13) parallèles de l'encoche (9), la vis de fixation (31) traversant, lorsqu'elle est vissée, un orifice de passage (39) dans la plaque de découpage,
un prisme de fixation (43) étant prévu entre le fond (50) de l'encoche (9) et la plaque de découpage (5), lequel prisme présente un centrage prismatique à 90° (surfaces d'appui 45, 47) pour une fixation en trois points de la plaque de découpage (5) et la plaque de découpage comportant des faces chanfreinées (51, 53) complémentaires auxdites surfaces d'appui, et
la plaque de découpage (5) étant réalisée pour l'essentiel sous la forme d'une plaque circulaire et comportant quatre faces chanfreinées (51, 53) décalées respectivement de 90° et complémentaires des surfaces d'appui (45, 47) du prisme de fixation (43),
**caractérisé** par le fait
que les faces chanfreinées (51, 53) prévues sur le pourtour extérieur de la plaque de découpage (5) circulaire peuvent être amenées en contact avec les surfaces d'appui (45, 47) par la tête de la vis de fixation et un creux (29) en forme d'entonnoir sur la zone avant de la tige porte-outil.

2. Outil selon la revendication 1, **caractérisé** par le fait que la plaque de découpage (5) mise en place est pressée avec précontrainte contre le prisme de fixation (43).

3. Outil selon la revendication 2, **caractérisé** par le fait que pour produire la précontrainte, le perçage (15) de la tige porte-outil (3) est plus grand que l'orifice de passage (39) de la plaque de découpage (5) et que l'axe (55) du creux (29) en forme d'entonnoir est décalé par rapport à l'axe (19) de l'orifice de passage (39) de la plaque de découpage en direction du fond (50) de l'encoche (9) le long de l'axe (17) de la tige porte-outil (3).

4. Outil selon l'une des revendications 1 à 3, **caractérisé** par le fait que le prisme de fixation (43) présente deux surfaces d'appui (45, 47) inclinées en sens inverse.

5. Outil selon la revendication 4, **caractérisé** par le fait que les plans qui s'étendent le long des surfaces d'appui (45, 47) coupent les parois latérales intérieures (11, 13) parallèles selon un angle différent de 90°.

6. Outil selon la revendication 5, **caractérisé** par le fait que des droites s'étendant parallèlement aux parois latérales intérieures (11, 13) le long des surfaces d'appui (45, 47) du prisme de fixation (43) se coupent selon un angle de sensiblement 90°.

7. Outil selon la revendication 5 ou 6, **caractérisé** par le fait que les angles d'inclinaison des surfaces d'appui (45, 47) sont symétriques.

8. Outil selon l'une des revendications 1 à 7, **caractérisé** par le fait que la plaque de découpage comporte quatre tranchants (55, 56, 57, 58).

9. Outil selon la revendication 8, **caractérisé** par le fait que chacun des tranchants (55, 56, 57, 58) s'étend sensiblement le long d'un quart de cercle.

10. Outil selon la revendication 8 ou 9, **caractérisé** par le fait que deux tranchants (55, 56 ; 57, 58) sont chaque fois décalés de 180° l'un par rapport à l'autre et sont disposés sur un côté de la plaque de découpage (5).

11. Outil selon la revendication 10, **caractérisé** par le fait que les deux tranchants d'un côté de la plaque de découpage (5) sont décalés chaque fois de 90° par rapport aux tranchants sur l'autre côté de la plaque de découpage (5).

12. Outil selon l'une des revendications 8 à 11, **caractérisé** par le fait qu'une pointe (59, 59') est réalisée à l'extrémité de chaque tranchant (55, 56, 57, 58) sensiblement en forme de quart de cercle.
